# EUROPEAN PATENT SPECIFICATION

(11) **EP 0 643 246 B1**
(45) Date of publication and mention of the grant of the patent: **13.11.1996**
(21) Application number: 94113499.1
(22) Date of filing: 30.08.1994
(51) Int. Cl.: F16K 31/60

(54) **Single-handle faucet with flow and temperature limiter**
Einhebel-Mischarmatur mit Temperatur und Durchflussbegrenzer
Mitigeur à monocommande avec limiteurs de température et de débit

(30) Priority: 14.09.1993 FI 934021
(43) Date of publication of application: 15.03.1995
(73) Proprietor: ORAS OY, 26101 Rauma (FI)
(72) Inventor: Nilsson, Pekka, Waldemar, SF-26100 Rauma (FI); Koppanen, Jorma Tapani, SF-26660 Rauma (FI)
(74) Representative: Stracke, Alexander, Dipl.-Ing.

(56) References cited:
- FI-A- 70 994
- FR-A- 2 665 500

## Description

The object of this invention is a single-handle faucet in which the flow rate can be controlled by a lifting or lowering movement of the handle of the faucet, and the mixing of cold and hot water can be controlled by a transversal rotational movement with respect to said movement of the handle, and in which the movement of the faucet is limited by a step-shaped stop and a limiting lever colliding with it, the lever being connected to a push-button in such a manner that the lever can be moved past the stop with the aid of the push-button in order to continue the movement of the faucet.

A single-handle faucet according to the preamble of claim 1 is known from the Finnish published specification 70994 (& EP-A-189170) which is provided with a stop and a motion limiting means colliding with it and formed as a trigger in such a manner that these together limit the rotational movement of the handle providing a limit to the temperature of the water from the faucet which can be exceeded by pressing the trigger so that it can move past the stop. The purpose is to prevent the accidental running of hot water from the faucet and to save energy by limiting the consumption of hot water.

However, a drawback of present faucets is that large amounts of water are easily wasted. Especially when opening the faucet, it is easy to first turn the flow rate to maximum and then decrease it to a flow rate suitable for washing one's hands, for instance. Thus it would be possible to provide considerable savings by limiting the flow rate.

The above invention, which eliminates the said drawback of known faucets, is characterized in that the faucet comprises at least two stops which are placed transversal to each other so that limits are set for the flow rate using at least one of the stops and for the temperature of the water provided by the faucet using the other stop, and the limits can be exceeded by moving the limiting lever past the corresponding stops with the aid of the push-button.

Thus it is essential for the faucet according to the invention that limits are set for both the flow rate and the water temperature using a single limiting lever which is pushed by the push-button. The limits can be exceeded when desired by simply pushing the push-button. The solution prevents unnecessary heavy running of water independent of its temperature, and in addition to this, especially the consumption of hot water is limited.

An advantageous application of the faucet according to the invention is characterized in that the faucet comprises stops limiting the flow rate on both sides of the stop limiting the temperature of the water in such a manner that the limit of the flow rate controlled by the stop which is above the set limit of the temperature of the water, i.e., on the hotter side, is lower than that below it, i.e., on the colder side. The solution is intended for saving proportionally more hot water than cold water.

According to another application of the invention the stops are placed on the ball-like curved surface of the cup-like portion detachably attached to the body of the faucet, said portion being movable in the rotational direction of the handle in order to set the position of the stop limiting the temperature of the water. The attachment of the body and the cup-like portion can be provided by curved, mutually compatible indentations on the portions in question, for instance. The solution makes it possible to control the highest temperature of water provided by the faucet without moving the limiting lever with the aid of the push-button.

The limiting lever included in the faucet according to the invention can be so shaped that it comprises three legs, the first of which comprises a limiting tip colliding with the stops, the second one serves as a spring supported by the body of the handle, and the third one is connected to the push-button so that, when it is pressed against the spring force of said second leg, it releases the limiting tip of the first leg from the stop. The limiting lever is preferably a separate piece the legs of which are combined on the axis which is fitted to the body of the handle into a chain link formed for it. Thus it is possible to control the maximum flow rate from the faucet which is obtained without moving the limiting lever using the push-button, either by changing the position of the axis of the limiting lever in the chain link or using mutually exchangeable limiting levers dimensioned in a different way.

The invention is described in the following in more detail with the aid of an example and with reference to the appended drawings in which:
Fig. 1 shows the upper end of the body and the handle of a single-handle faucet according to the invention, the faucet being closed and the handle being turned to the area below the set limit of the temperature of the water,
Fig. 2 shows a part of the faucet of Fig. 1 which is turned, by lifting the handle, to provide a flow rate corresponding to the limit set by the stop,
Fig. 3 shows the same faucet in which the limiting lever is released from the stop by pressing the push-button,
Fig. 4 shows the handle turned to the position providing the maximum flow rate,
Fig. 5 shows the faucet turned from the position of Fig. 3 to the hotter side of the limit of the temperature of the water set by one of the stops,
Fig. 6 shows a cross-section of the cup-like member placed on the upper end of the body and comprising the stops limiting the flow rate and the temperature of the water, and
Fig. 7 shows the top view of the cup-like member.

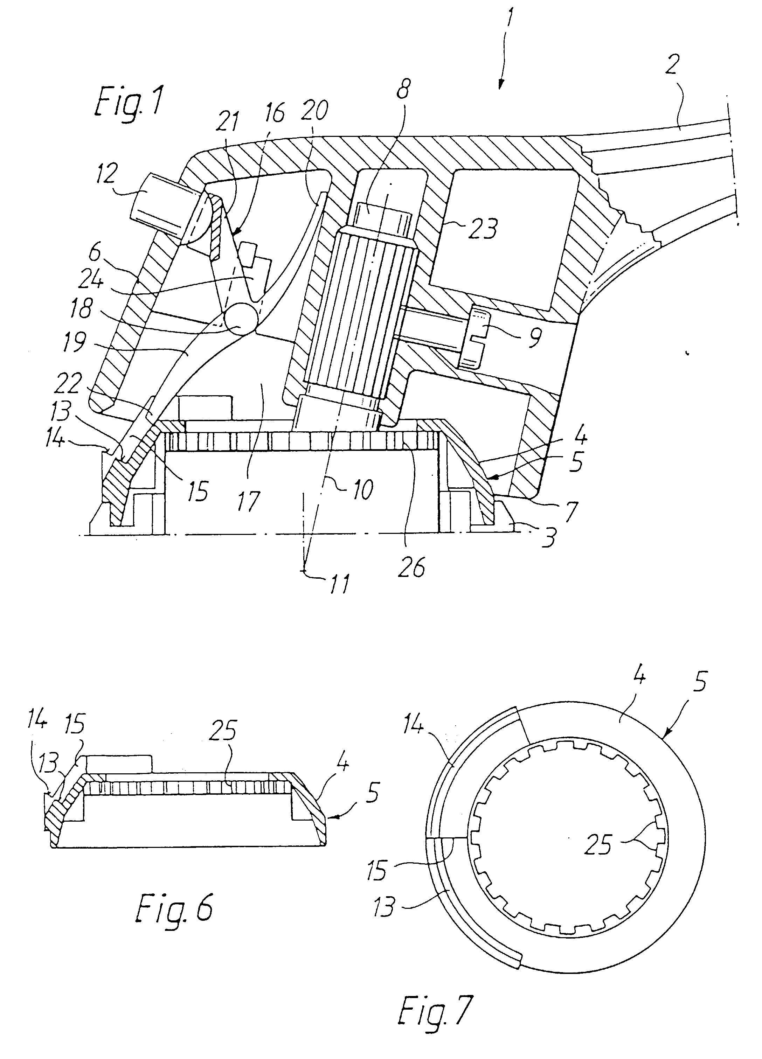

Fig. 1 shows a cross-section of single-handle faucet 1 comprising handle 2 which is turned in the vertical level by lifting and lowering movements and twisted transversally to these movements, the handle being connected to body 3 of the faucet in which the mixing of the cold and hot water flow coming to the faucet takes place. Because the main part of the body is known per se and not essential to the present invention, it is not shown in Fig. 1. The figure only shows the upper end of body 3 and protective cup 5 attached thereto comprising ball-like curved surface 4. Lower edge 7 of head 6 of handle 2, the head expanding into the shape of a cylinder, is arranged to follow said ball-surface 4 when the handle moves.

Handle 2 is attached at its head 6, using screw 9, to shaft 8 moving in correspondance with said movements of the handle. The rotational movement of handle 2, which is used to control the temperature of the water obtained from the faucet, is carried out around the longitudinal axis of shaft 8 marked with reference number 10 in Fig. 1, and the lifting and lowering movements of the handle which are used to control the flow rate from the faucet, are carried out around the hinge point of shaft 8 marked by reference number 11 in Fig. 1. It should be appreciated that, with respect to said lifting and lowering movements, the direction of the movements mainly depends on the position the faucet has been placed in, and the position according to Fig. 1 in which handle 2 is essentially horizontal does not limit the invention in this respect in any way.

It is essential to the faucet according to the invention illustrated in Fig. 1 that the flow rate from the faucet and the temperature of the water is limited by limiting the movements of handle 2 so that the set limits can be exceeded only by pressing push-button 12 connected to the handle. Stops 13-15 formed on ball-surface 4 of protective cup 5 of said body as well as limiting lever 16, which cooperates therewith, serve as limiting members, push-button 12 being arranged to press the limiting lever.

Limiting lever 16, which is placed into a circular internal cavity 17 of cylindrical head 6 of the handle, comprises axis 18 and three legs 19-21 separating therefrom. One of the legs 19 comprises limiting tip 22 colliding with stops 13-15. The second leg 20 serves as a spring pressing against centre boss 23 surrounding shaft 8 of head 6 of the handle. The third leg 21 is connected to push-button 12 so that it can be pressed against the spring force of said second leg 20 to release limiting tip 22 of first leg 19 from stop 13-15. Stops 13, 14 which are transversal to the lifting and lowering movements of handle 2, limiting tip 22 colliding with one of the stops when the handle is lifted, set the limits to the flow rate from the faucet, exceeding the limits requiring the limiting tip to be moved past the stop with the aid of push-button 12. Stop 15 which is transversal to the twisting movement of handle 2 and which limiting tip 22 collides with when the handle is twisted from the area of cold water towards the area of hot water, in turn sets a limit to the temperature of the obtained water, exceeding the limit correspondingly requiring the limiting tip to be moved over the stop with the aid of push-button 12.

Said stops 13-15 can also be seen in Figs. 6 and 7 representing protective cup 5 at the end of body 3 of the faucet. In the solution according to the Figs., stop 13 on the colder side of the limit of the temperature of the water set by stop 15 is situated further on the path of movement of the handle than stop 14 on the hotter side of said temperature limit. This causes the faucet to yield a somewhat heavier flow rate on the boundary spot on the side of colder water than on the side of hotter water.

The limit of the flow rate set by stops 13, 14 and limiting lever 16 can be changed by replacing the limiting lever forming a separate piece, for instance. If limiting lever 16 shown in Fig. 1 is replaced by another lever in which the leg 19 ending in limiting tip 22 is longer, the collision of the tip with the stop takes place earlier, whereby the flow rate is lower. Correspondingly, the flow rate can be increased by shortening leg 19. Corresponding changes can also be provided by moving axis 18 of the limiting lever in internal chain link 24 of the head of the handle to which it is fitted.

According to Figs. 6 and 7, the inner circumference of circular protective cup 5 is provided with indentation 25 circling around it which fits into corresponding indentation 26 (Fig. 1) at the end of body 3 of the faucet. The position of stop 15 limiting the temperature of the incoming water can thus be adjusted in the rotational direction of the handle of the faucet by moving protective cup 5 in indentation 26 with respect to stationary body 3 of the faucet.

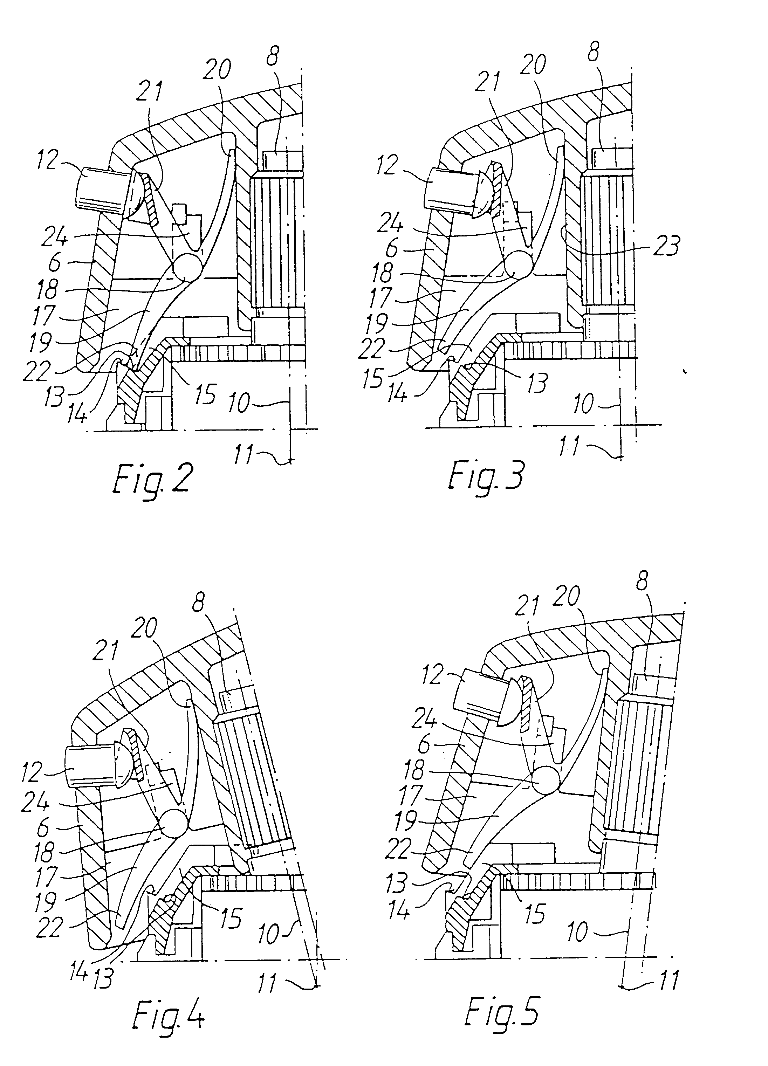

Fig. 1 shows the closed faucet in which handle 2 is twisted to the colder side of the limit set by stop 15 which is the normal range of use of the faucet with respect to the temperature of the water obtained therefrom. Fig. 2 shows the situation where the faucet has been opened by lifting the handle and limiting tip 22 of limiting lever 16 has collided with stop 13. In this position the faucet yields its maximum flow rate available without using push-button 12. If a heavier flow rate than this or hotter water than the limit set by stop 15 are desired from the faucet, push-button 12 is pressed against leg 21 of limiting lever 16 in accordance with Fig. 3 so that the lever is tensioned against centre boss 23 of the handle and limiting tip 22 is detached from stop 13. Is the handle is further lifted after this, the position according to Fig. 4 is reached in which limiting tip 22 has moved past stop 13 and the faucet yields the maximum flow rate. On the other hand, if the handle is twisted, the position according to Fig. 5 is reached in which limiting tip 22 has moved past stop 15 limiting the temperature to the range where the faucet yields hotter water than the limit in question. In this hot range the flow rate is limited by stop 14 which can be surpassed by pressing push-button 12 and lifting the handle in the same way as is done with stop 13 in the colder temperature range. The decrease of the flow rate is then effected by a lowering movement of the handle and the return to the colder range is accomplished by twisting the handle without needing to touch push-button 12.

It is obvious to those skilled in the art that different applications of the invention are not limited by the described example but can vary within the appended Claims.

## Claims

1. A single-handle faucet (1) in which the flow rate can be controlled by a lifting or lowering movement of the handle (2) of the faucet and the mixing of cold and hot water can be controlled by transversal rotational movement with respect to said movement of the handle, and in which the movement of the handle is limited by a step-shaped stop (13-15) and a limiting lever (16) colliding with it and connected to a push-button (12) so that the lever can be moved past the stop with the aid of the push-button for continuing the movement of the handle, **characterized** in that the faucet (1) includes at least two stops (13-15) which are placed transversal to each other in such a way that at least one of the stops (13, 14) is used to set a limit to the flow rate and the other one (15) is used to set a limit to the temperature of the water from the faucet, the arrangement being such that the limits can be exceeded by moving the limiting lever (16) past the corresponding stops with the aid of the push-button (12).

2. A faucet according to Claim 1, **characterized** in that it comprises stops (13, 14) limiting the flow rate on both sides of the stop (15) limiting the temperature of the water so that the flow rate limited by the stop on the hotter side of the set limit of the temperature of the water is lower than that on its colder side.

3. A faucet according to Claim 1 or 2, **characterized** in that the stops (13-15) are placed on the ball-like curved surface (4) of the cup-like portion (5) detachably attached to the body (3) of the faucet, said portion being movable in the rotational direction of the handle (2) to set the position of the stop (15) limiting the temperature of the water.

4. A faucet according to Claim 3, **characterized** in that the body (3) of the faucet and the cup-like portion (5) comprise curved, mutually compatible indentations (25, 26) for detachably attaching the parts in question to each other.

5. A faucet according to any of the preceding Claims, **characterized** in that the limiting lever (16) comprises three legs (19-21) of which the first one (19) comprises a limiting tip (22) colliding with the stops (13-15), the second one (20) serves as a spring supported by the body of the handle (2), and the third one (21) is connected to the push-button (12) in such a way that it can be pressed against the spring force of said second leg (20) for releasing the limiting tip of the first leg (19) from the stop.

6. A faucet according to Claim 5, **characterized** in that the limiting lever (16) is a separate piece the legs of which (19-21) are combined on the axis which is fitted to the body of the handle (2) in a chain link (24) formed for it.

## Patentansprüche

1. Eine Einhebel- Mischarmatur (1), bei der die Durchflußrate durch Anhebe- und Absenk- Bewegungen eines Handgriffes (2) der Mischarmatur kontrolliert werden kann, und das Mischen von kaltem und warmem Wasser durch quer dazu angeordnete rotatorische Bewegungen in Abhängigkeit von besagten Bewegungen des Handgriffes kontrolliert werden kann, und bei der die Bewegungen des Handgriffes durch stufenförmige Anschläge (13, 14, 15) und einen begrenzenden Hebel (16) begrenzt sind, der mit diesen zusammenstößt und mit einem Druckknopf (12) verbunden ist, so daß der Hebel jenseits der Anschläge unter Zuhilfenahme des Druckknopfes für die Weiterführung der Bewegungen des Handgriffes bewegt werden kann,
**dadurch gekennzeichnet, daß**
die Mischarmatur (1) mindestens zwei Anschläge (13, 14, 15) enthält, die quer zueinander in einer derartigen Weise angeordnet sind, daß zumindestens einer der Anschläge (13, 14) zum Setzen der Grenzen der Durchflußrate nutzbar ist und der andere Anschlag (15) zum Setzen der Grenzen der Temperatur des Wassers aus der Mischarmatur nutzbar ist, wobei die Anordnung derart ist, daß die Grenzen durch Bewegen des begrenzenden Hebels (16) jenseits der entsprechenden Anschläge unter Zuhilfenahme des Druckknopfes (12) überschritten werden können.

2. Eine Mischarmatur entsprechend Anspruch 1, **dadurch gekennzeichnet, daß** sie Anschläge (13, 14) enthält, die die Durchflußrate auf beiden Seiten des Anschlages (15) begrenzen, der die Temperatur des Wassers begrenzt, so daß die Durchflußrate, die durch den Anschlag auf der wärmeren Seite der gesetzten Grenze der Temperatur geringer als diejenige auf der kälteren Seite ist.

3. Eine Mischarmatur gemäß einem der Ansprüche 1 oder 2, **dadurch gekennzeichnet, daß** die Anschläge (13, 14, 15) auf einer ballartig gekrümmten Oberfläche (4) eines schalenartigen Bereiches (5) angeordnet sind, der lösbar an dem Körper (3) der Mischarmatur befestigt ist, wobei besagter Bereich in der rotatorischen Richtung des Handgriffes (2) bewegbar ist, um die Position des Anschlages (15) zu setzen, der die Temperatur des Wassers begrenzt.

4. Eine Mischarmatur entsprechend Anspruch 3, **dadurch gekennzeichnet, daß** der Körper (3) der Mischarmatur und der schalenartige Bereich (5) gekrümmte, gegenseitig zueinander passende Einrückungen (25, 26) zur lösbaren Festlegung der fraglichen Teile jeweils aneinander enthalten.

5. Eine Mischarmatur entsprechend irgendeinem der vorstehenden Ansprüche, **dadurch gekennzeichnet, daß** der begrenzende Hebel (16) drei Schenkel (19, 20, 21) aufweist, deren erster Schenkel (19) eine begrenzende Spitze (22) enthält, die mit den Anschlägen (13, 14, 15) zusammenstößt, der zweite Schenkel (20) als Feder dient, die von dem Körper des Handgriffes (2) getragen wird, und der dritte Schenkel (21) mit dem Druckknopf (12) in einer solchen Weise verbunden ist, daß er gegen die Federkraft des besagten zweiten Schenkels (20) zum Abheben der begrenzenden Spitze des ersten Schenkels (19) von dem Anschlag gedrückt werden kann.

6. Eine Mischarmatur entsprechend Anspruch 5, **dadurch gekennzeichnet, daß** der begrenzende Hebel (16) ein separates Teil ist, dessen Schenkel (19, 20, 21) auf einer Achse zusammengefaßt sind, die mit dem Körper des Handgriffes (2) in einem Verankerungselement (chain link) (24) befestigt ist, der hierfür gebildet ist.

## Revendications

1. Mitigeur à monocommande (1), dans lequel le débit peut être contrôlé par un mouvement de levage ou d'abaissement de la poignée (2) du mitigeur et le mélange d'eau froide et d'eau chaude peut être contrôlé par un mouvement de rotation transversal par rapport audit mouvement de la poignée, et dans lequel le mouvement de la poignée est limité par une butée étagée (13 à 15), et un levier de limitation (16) la heurtant est connecté à un bouton-poussoir (12), de manière que le levier puisse être déplacé au-delà de la butée à l'aide du bouton-poussoir, pour continuer le mouvement de la poignée, caractérisé en ce que le mitigeur (1) comprend au moins deux butées (13 à 15) placées transversalement l'une par rapport à l'autre, de manière qu'au moins l'une dés butées (13, 14) soit utilisée pour imposer une limite au débit et que l'autre butée (15) soit utilisée pour imposer une limite à la température de l'eau provenant du mitigeur, l'agencement étant tel que les limites peuvent être dépassées en déplaçant le levier de limitation (16) au-delà des butées correspondantes, à l'aide du bouton-poussoir (12).

2. Mitigeur selon la revendication 1, caractérisé en ce qu'il comprend des butées (13, 14) limitant le débit des deux côtés de la butée (15), limitant la température de l'eau, de manière que le débit limité par la butée, du côté le plus chaud de la limite établie de la température de l'eau soit inférieur à celui se trouvant de son côté le plus froid.

3. Mitigeur selon la revendication 1 ou 2, caractérisé en ce que les butées (13 à 15) sont placées sur la surface incurvée (4) en forme de bille de la partie en forme de coupelle (5), fixée amovible au corps (3) du mitigeur, ladite partie pouvant être déplacée dans la direction de rotation de la poignée (2), pour régler la position de la butée (15) limitant la température de l'eau.

4. Mitigeur selon la revendication 3, caractérisé en ce que le corps (3) du mitigeur et la partie en forme de coupelle (5) comprennent des empreintes (25, 26) incurvées, mutuellement compatibles, pour fixer amovibles entre elles les parties en question.

5. Mitigeur selon l'une quelconque des revendications précédentes, caractérisé en ce que le levier de limitation (16) comprend trois jambages (19 à 21), parmi lesquels le premier (19) comprend une pointe de limitation (22) heurtant les butées (13 à 15), le deuxième (20) sert de ressort supporté par le corps de la poignée (2), et le troisième (21) est connecté au bouton-poussoir (12) de manière à pouvoir être pressé à l'encontre de la force élastique exercée par ledit deuxième jambage (20), pour libérer la pointe de limitation du premier jambage (19) depuis la butée.

6. Mitigeur selon la revendication 5, caractérisé en ce que le levier de limitation (16) est une pièce séparée, dont les jambages (19 à 21) sont combinés sur l'axe qui est monté sur le corps de la poignée (2), par une liaison à chaîne (24) formée à cette fin.
